# EUROPEAN PATENT APPLICATION

(11) **EP 3 444 127 A1**
(43) Date of publication of application: **20.02.2019**
(21) Application number: 17782346.5
(22) Date of filing: 10.04.2017
(51) Int. Cl.: B60C 9/00, B60C 9/18, B60C 9/20, D07B 1/06

(54) **TIRE FOR CONSTRUCTION VEHICLES, AND STEEL CORD**

(30) Priority: 15.04.2016 JP 2016082120
(71) Applicant: Bridgestone Corporation, Tokyo 104-8340 (JP)
(72) Inventor: TAKUBO Yoshihisa, Tokyo 1048340 (JP)
(74) Representative: Oxley, Robin John George
(86) International application number: PCT/JP2017/014661
(87) International publication number: WO 2017/179533

(57) **Abstract**

A construction vehicle tire (1) includes a carcass layer (3) and a belt layer (5) formed by six belts at an outer side of the carcass layer (3) in a tire radial direction. A fourth belt (4B) arranged fourth from the carcass layer (3) toward the outer side in the tire radial direction among the belt layer (5) includes steel cords arranged along a predetermined direction. The steel cord includes one core strand (11) having a two-layer-twisted structure in which a plurality of core filaments (10a) and a sheath filament (10b) forming a sheath are twisted, and a plurality of sheath strand (12) twisted with the core strand (11), the sheath strand (12) having a layer-twisted structure in which a plurality of steel filaments (20) are twisted. A gap between the filaments is filled with a predetermined rubber material.

## Description

### [Technical Field]

The present invention relates to a construction vehicle tire and a steel cord (hereinafter, merely referred to as "cord"), in particular, a steel cord used for reinforcing a rubber product such as a tire.

### [Background Art]

In a pneumatic tire for a heavy load used in a construction vehicle or the like, a belt is generally formed by a plurality of belt layers in order to suppress growth of a diameter when the tire is inflated to a predetermined inner pressure or to improve shear resistance against a projection such as a rock. Further, various methods to improve separation resistance between the belt layers are known. For example, in Patent Literature 1, a belt is formed by four belt layers and an innermost belt layer and a belt layer adjacent to the innermost layer at an outer side in a tire radial direction are mutually inclined in opposite directions against a tire width direction so as to intersect each other.

Further, as a reinforcing material for the belt layer, a steel cord formed by twisting a plurality of steel filaments is generally adopted. In particular, a tire used in a large vehicle such as a construction vehicle is used under a heavy load on an uneven ground having large unevenness, and therefore high strength and high durability are required especially to the steel cord served as a reinforcing material. Accordingly, in a large size tire, a steel cord having a so-called multi-twisted structure formed by twisting a plurality of strands, each of the strands being formed by twisting a plurality of the steel filaments, is adopted.

### [Citation List]

### [Patent Literature]

[PTL 1] Japanese Unexamined Patent Application Publication No. 2004-098850

### [Summary of Invention]

### [Problems to be Solved by the Invention]

However, when the tire having the belt layer is damaged and a cut that reaches the belt layer is generated, outside water invaded into the belt layer rusts the steel cord. With this, a contact failure between the steel cord and the rubber is caused and therefore separation between the belt layers might be generated.

Accordingly, it is preferable that, in the steel cord, the rubber is filled between the filaments to derive so-called good rubber penetration performance (rust prevention performance) from a viewpoint of preventing rust. However, in the cord having the multi-twisted structure, the number of the filaments is large and therefore the twisted structure is complicated. Consequently, it is difficult to obtain required rust prevention performance.

Accordingly, an object of the present invention is, in consideration of the problem described above, to provide a construction vehicle tire and a steel cord including a cord having a multi-twisted structure and being capable of improving rust prevention performance.

### [Means for Solving the Problems]

The inventors conducted a study to solve the problems described above by adopting the following configuration, so that the present invention was completed.

That is, a construction vehicle tire according to the present invention includes a carcass layer, and a belt layer formed by six belts at an outer side of the carcass layer in a tire radial direction. A fourth belt arranged fourth from the carcass layer toward the outer side in the tire radial direction among the belt layer includes steel cords arranged along a predetermined direction.
The steel cord includes one core strand having a two-layer-twisted structure in which a plurality of core filaments and a sheath filament forming a sheath are twisted, and a plurality of sheath strands twisted with the core strand, the sheath strand having a layer-twisted structure in which a plurality of steel filaments are twisted. Each of a gap between the core filaments adjacent to each other, a gap between the sheath filaments adjacent to each other, a gap between the core filament and the sheath filament, and a gap between the core stand and the sheath strand is filled with a predetermined rubber material.

Further, the steel cord according to the present invention may be used in a belt layer arranged third from a carcass layer toward an outer side in the tire radial direction. Further, the steel cord according to the present invention may be used in a carcass ply of a carcass layer.

In the steel cord according to the present invention, it is preferable that a ratio dc/ds of a diameter dc of the sheath filament forming the sheath of the core strand and a diameter ds of an outermost layer sheath filament forming an outermost layer sheath of the sheath strand is set to be more than 1.25 and less than or equal to 1.50.

Further, in the steel cord according to the present invention, the number of the sheath strand may be set in a range between 7 and 9. Further, in the steel cord according to the present invention, it is preferable that each of the filaments forming the core strand is formed in the same diameter. Further, in the steel cord according to the present invention, a cord diameter is preferably set to 4.40 mm or more.

Further, the steel cord according to the present invention may be used in belt layers arranged first and second from the carcass layer toward the outer side in the tire radial direction. Further, when a tire sectional height SH is defined by a length between a bottom surface of a bead portion and a portion the outer side of the tire in the tire radial direction and a tire sectional height S is defined by a length between the bottom surface of the bead portion and a portion at an outer side of a belt layer arranged sixth toward the outer side in the tire radial direction in a new tire, the tire sectional height SH may be set to be 85% to 95% of the tire sectional height S.

### [Effects of the Invention]

According to the present invention, the construction vehicle tire and the steel cord capable of improving the rust prevention performance can be provided.

### [Brief Description of Drawings]

[Fig. 1] Fig. 1 is a perspective view illustrating a half part of a tread of a pneumatic tire, which is partially cut, according to an embodiment of the present invention.
[Fig. 2] Fig. 2 is a cross-sectional view in a tire width direction illustrating one example of a configuration of a steel cord of the present invention.
[Fig. 3] Fig. 3 is a cross-sectional view illustrating a part of the pneumatic tire according to the embodiment of the present invention.

### [Description of Embodiments]

Hereinafter, an embodiment of the present invention will be described with reference to the drawings. The same reference signs are assigned to the same parts in the drawings and the description thereof is therefore omitted.

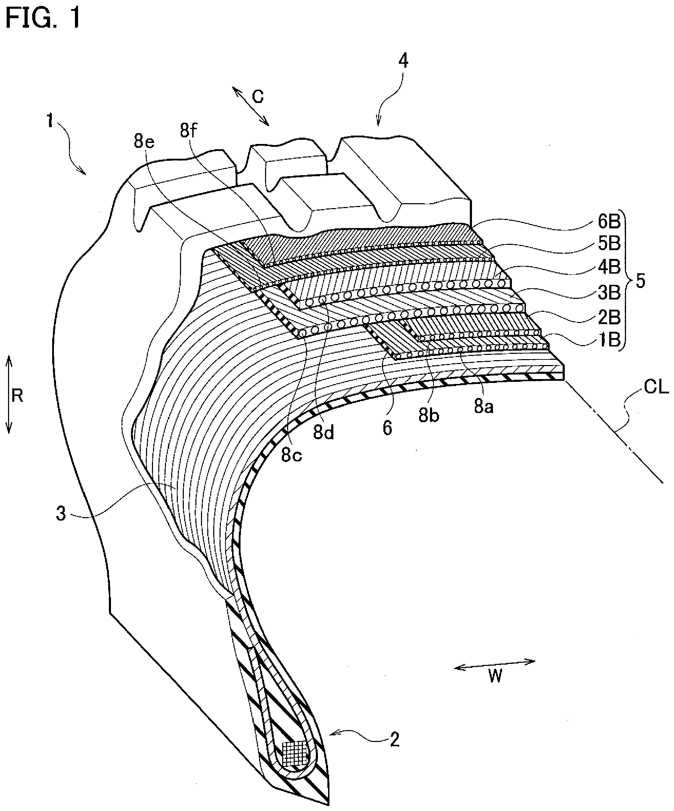

A configuration of a pneumatic tire 1 according to the present embodiment is described with reference to Fig. 1. Here, the pneumatic tire 1 is formed as a construction vehicle tire applied to a heavy load vehicle such as a construction vehicle.

As shown in Fig. 1, the pneumatic tire 1 is provided with a bead portion 2 contacted with a rim (not shown), and a carcass layer 3 that forms a frame of the pneumatic tire 1.

A tread portion 4 is continuously formed along a tire circumferential direction C at an outer side in a tire radial direction of the carcass layer 3. The tread portion 4 is a portion forming a tread ground contact surface in which an outer circumferential surface is contacted with a road surface. The tread portion 4 is formed by tread rubber. A predetermined tread pattern is formed in the tread portion 4.

A belt portion 5 is formed between the carcass layer 3 and the tread portion 4. The belt portion 5 is served as a hoop that partially regulates expanding deformation of the carcass layer 3 when the inner pressure is applied to the pneumatic tire 1. Further, the belt portion 5 is formed to suppress a change of a load applied to the pneumatic tire 1 or to suppress deformation caused by rotation and to receive input from the road surface so as to cushion an impact. The belt portion 5 is embedded in the tread rubber of the tread portion 4 so as to extend in the tire circumferential direction C.

In the present embodiment, the belt portion 5 is formed by laminating six belt layers of a first belt layer 1B, a second belt layer 2B, a third belt layer 3B, a fourth belt layer 4B, a fifth belt layer 5B, and a sixth belt layer 6B in this order from an inner side toward an outer side in a tire radial direction R, namely from the carcass layer 3 toward the tread portion 4.

The first belt layer 1B is arranged at an innermost side, namely arranged first, in the tire radial direction R among a plurality of the belt layers. The second belt layer 2B is arranged second at an outer side of the first belt layer 1B in the tire radial direction R. The third belt layer 3B is arranged third at an outer side of the second belt layer 2B in the tire radial direction R. The fourth belt layer 4B is arranged fourth at an outer side of the third belt layer 3B in the tire radial direction R. The fifth belt layer 5B is arranged fifth at an outer side of the fourth belt layer 4B in the tire radial direction R. The sixth belt layer 6B is arranged sixth at an outer side of the fifth belt layer 5B in the tire radial direction R. The sixth belt layer 6B is arranged at an outermost side among a plurality of the belt layers.

Further, as shown in Fig. 1, lengths of the belt layers in a tire width direction W fulfill the following relations. The first belt layer 1B is longer than the second belt layer 2B and shorter than the third to sixth belt layers 3B to 6B. The second belt layer 2B is the shortest among the six belt layers. The third belt layer 3B is longer than the first belt layer 1B, the second belt layer 2B, the fourth belt layer 4B and the sixth belt layer 6B and shorter than the fifth belt layer 5B. The fourth belt layer 4B is longer than the first belt layer 1B and the second belt layer 2B and shorter than the third belt layer 3B and the fifth belt layer 5B. The fifth belt layer 5B is the longest among the six belt layers. The sixth belt layer 6B is longer than the first belt layer 1B and the second belt layer 2B and shorter than the third belt layer 3B and the fifth belt layer 5B. Here, the ratios of the lengths are not especially limited.

Cords 8a, 8b, 8c, 8d, 8e, 8f are embedded in the belt layers 1B, 2B, 3B, 4B, 5B, 6B, respectively. The belt layers 1B, 2B, 3B, 4B, 5B, 6B having a layer structure are formed by coating the cords 8a, 8b, 8c, 8d, 8e, 8f with rubber, respectively.

The cords in the belt layers adjacent to each other in the tire radial direction R are inclined in opposite directions to each other against the tire equatorial line CL. That is, the cords in the belt layers adjacent to each other in the tire radial direction R are laminated to intersect each other. Specifically, each group of the first belt layer 1B and the second layer 2B, the second belt layer 2B and the third belt layer 3B, the third belt layer 3B and the fourth belt layer 4B, the fourth belt layer 4B and the fifth belt layer 5B, and the fifth belt layer 5B and the sixth belt layer 6B is formed as an intersection laminated body in which extending directions of the cords are intersected. With this, even when the pneumatic tire 1 treads on a projection such as a rock in various directions, the break of the pneumatic tire 1 can be prevented, and the rigidity in the tire circumferential direction C can be improved.

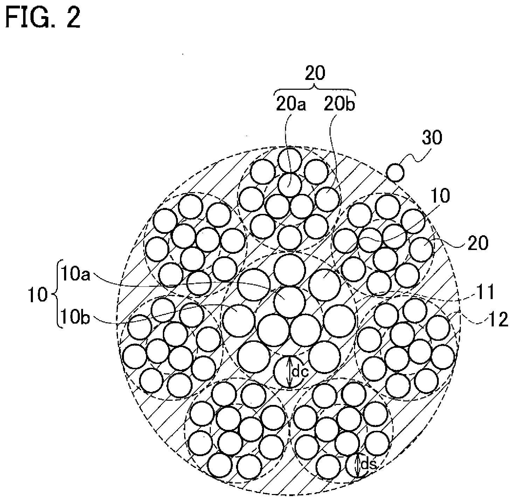

Next, a steel cord used in the belt portion 5 is described with reference to Fig. 2. Here, the steel cord shown in Fig. 2 is used as a reinforcing cord of the third belt layer 3B and the fourth belt layer 4B.

As shown in Fig. 2, the steel cord is provided with one core strand 11 having a two-layer-twisted structure in which a plurality of steel filaments 10 are twisted, and a plurality of sheath strands 12, seven sheath strands 12 in an example shown in Fig. 2, having a two-layer-twisted structure in which a plurality of the steel filaments 10 are twisted. The steel cord has a multi-twisted structure in which the sheath strands 12 are twisted around the core strand 11. The core strand 11 has a 3+8 structure in which a sheath is formed by twisting eight sheath filaments 10b around a core formed by twisting three core filaments 10a. Further, the sheath strand 12 has a 3+8 structure in which a sheath is formed by twisting eight sheath filaments 20b around a core formed by twisting three core filaments 20a. Further, a spiral filament 30 is wound in a spiral manner on an outer circumference of the sheath strand 12.

Further, as shown in Fig. 2, a gap between the core filaments 10a adjacent to each other is filled with a predetermined rubber material. Further, a gap between the sheath filaments 10b adjacent to each other is also filled with the predetermined rubber material. Similarly, each of a gap between the core filaments 20a adjacent to each other and a gap between the sheath filaments 20b adjacent to each other is filled with the predetermined rubber material. Further, a gap between the core filament 10a and the sheath filament 10b is filled with the predetermined rubber material. Further, a gap between the core filament 20a and the sheath filament 20b is also filled with the predetermined rubber material. Further, a gap between the core strand 11 and the sheath strand 12 is also filled with the predetermined rubber material. Here, the rubber material is not especially limited, and therefore natural rubber or the like may be adopted.

In the present invention, it is important that a ratio dc/ds of a diameter dc of the sheath filament 10b forming a sheath of the core strand 11 and a diameter ds of an outermost layer sheath filament 20b forming an outermost layer sheath of the sheath strand 12 is set to be more than 1.25 and less than or equal to 1.50. In order to improve the rubber penetration performance, it is effective to enlarge a gap between the filaments, in particular in the core strand 11 located at a center of the cord, as the gap between the sheath filaments 10b is larger, the rubber penetration performance becomes superior. On the other hand, in order to form a gap, in a case in which the number of the sheath filaments 10b of the core strand 11 is set to be six or less, the strength of the cord is deteriorated, while in a case in which the diameter of the sheath filament 10b of the core strand 11 is made small and the number of the sheath filaments 10b is set to eleven or more, the shear resistance against the sheath strand 12 is deteriorated. Accordingly, the present invention defines the value of the ratio dc/ds in a case in which a configuration in which the core strand 11 is formed as a two-layer-twisted structure and the number of the sheath filaments 10b is set to eight is adopted.

It is necessary to set the value of the ratio dc/ds to be more than 1.25 and less than or equal to 1.50, more preferably more than or equal to 1.27 and less than or equal to 1.42. The rubber is hard to penetrate the core strand 11 located at the center of the cord compared to the sheath strand 12 located around the core strand 11. Accordingly, it is preferable that an average of the gap between the sheath filaments 10b is larger than an average of the gap between the sheath filaments 20b from a viewpoint of improving the rust prevention performance. By setting the value of the ratio dc/ds to be more than 1.25 and less than or equal to 1.50, the average of the gap between the sheath filaments 10b is made larger than the average of the gap between the sheath filaments 20b. With this, the rubber penetrates the core strand 11 located at the center of the cord easily. Specifically, by setting the value of the ratio dc/ds to be more than 1.25 and less than or equal to 1.50, a rubber penetration rate is 1.70 to 2.50 times as large as that in a configuration in which the steel cord according to the present invention is not adopted. The rubber penetration rate is preferable as the value thereof is larger. Further, by setting the value of the ratio dc/ds to be more than 1.25 and less than or equal to 1.50, a rust growth rate in a longitudinal direction of the steel cord is approximately 0.50 to 0.60 times as large as that in the configuration in which the steel cord according to the present invention is not adopted. The rust growth rate is preferable as the value thereof is smaller because the growth of the rust is less.

Further, by setting the value of the ratio dc/ds to be more than 1.25 and less than or equal to 1.50, shear forces applied to the filaments of the core strand 11 and the sheath strand 12 are reduced, and thereby the core strand 11 having strength that endures fastening force by the sheath strand 12 sufficiently can be obtained. Consequently, the shear resistance of the cord can be improved by improving the shear resistance of the cord itself. Here, Patent Literature (Japanese Unexamined Patent Application Publication No. 2009-299223) discloses that the ratio dc/ds is set to be more than 1.05 and less than 1.25 and in a case in which the ratio dc/ds exceeds 1.25, preceding break of the filaments of the core strand and the sheath strand may be caused. While, the present inventors conducted a study and, as a result, derived knowledge that the shear force is reduced in a case in which the ratio dc/ds is more than 1.25 by forming the core strand 11 as a two-layer-twisted structure and thereby the shear resistance of the cord is improved. In a case in which the ratio dc/ds is less than or equal to 1.25 and the core strand is formed as a two-layer-twisted structure, the improvement effect of the shear resistance of the cord is small, and in a case in which the ratio dc/ds is more than 1.50, the diameter ds is made excessively small against the diameter dc and thereby the preceding break of the outermost layer sheath filament that forms the outermost layer sheath of the sheath strand 12 might be caused easily.

In the cord of the present invention, the number of the layers in the layer-twisted structure of the sheath strand 12 is not especially limited, and therefore, for example, the number of the layers may be set to two or three. Accordingly, when a first sheath and a second sheath are defined in this order from an inside of the layer-twisted structure, in a case in which the sheath strand 12 is formed as a two-layer-twisted structure, the outermost layer sheath of the sheath strand 12 corresponds to the first sheath, while in a case in which the sheath strand 12 is formed as a three-layer-twisted structure, the outermost layer sheath of the sheath strand 12 corresponds to the second sheath.

Further, in the cord of the present invention, it is preferable that the number of the sheath strands 12 is set in a range between 7 and 9. In a case in which each of the core strand 11 and the sheath strands 12 is formed in the same diameter and the sheath strands are filled without a gap therebetween, six sheath strands can be arranged. However in the present invention, as shown in Fig. 2, seven to nine sheath strands 12 can be arranged by setting the diameter of the sheath strand 12 to be smaller than the diameter of the core strand 11. Accordingly, a resistance of the core strand against fastening force by the sheath strand can be further improved by setting the number of the sheath strands 12 in a range between 7 and 9, and thereby the shear resistance of the cord can be further improved.

Further, in the cord of the present invention, as shown in Fig. 2, it is preferable that each of the diameters of the filaments 10 that form the core strand 11 is formed in the same diameter. In the core strand 11, by setting the diameter of the core filament 10a to be smaller than the diameter of the sheath strand 10b, the shear resistance can be improved. However, in the present invention in which the core strand 11 is formed as a two-layer-twisted structure, it is preferable that the diameter of the core filament 10a of the core strand 11 is set to be approximately equal to the diameter of the sheath strand 10b. With this, in the core strand 11, a space for arranging the sheath filaments 10b can be secured easily. Accordingly, the rubber easily penetrates the core strand 11 located at the center of the cord.

Further, it is preferable that a cord diameter of the cord of the present invention is set to 4.40 mm or more, for example set in a range between 5.00 mm and 6.00 mm. By adopting the cord having a large diameter of 4.40 mm or more, especially both of the strength and the shear resistance required for a large tire used in a large vehicle such as a construction vehicle can be secured.

In the cord of the present invention, the wire diameter or the tensile strength of the filament used in the cord, a twisted direction or a twisted pitch of the filament or the strand, or the like is not especially limited, and therefore each of them can be selected appropriately in the usual manner in accordance with the desire thereof. For example, a so-called high tensile strength steel having a carbon content of 0.80 mass% or more may be adopted as the filament. Further, the cord of the present invention may include or may not include a spiral filament.

The cord of the present invention is superior in the rust prevention performance and the shear resistance, and therefore the cord of the present invention is suitably used as a reinforcing material of a large tire used in a large vehicle such as a construction vehicle, in particular an extremely large off-road radial tire having a tire size of 40.00R57.

Hereinafter, the present invention is described in detail with reference to examples.

As shown in tables described below, the steel cords, which are formed by twisting a plurality of the sheath cords having a layer-twisted structure, around one core strand having a layer-twisted structure, according to examples and comparative examples were produced. The steel cords have different ratios dc/ds of the diameter dc of the sheath filament that forms the outermost layer sheath of the core strand and the diameter ds of the sheath filament that forms the outermost layer sheath of the sheath strand derived from different cord structures. Each produced cord was subjected to the evaluation described below, and the result thereof is shown in the tables together with the cord structure.

### Shear resistance

The shear breakdown resistance of each of the produced cords was evaluated by using a Charpy impact tester. The result is indexed as the result of the cord according to the comparative example 1 is defined as 100. As the value is larger, the shear resistance is superior and preferable.

### Steel amount

A steel amount per unit length of each of the produced cords was measured. The result is indexed as the result of the steel amount of the cord according to the comparative example 1 is defined as 100. As the value is smaller, the steel amount is less and therefore it is superior in light weight.

**Table 1**

| | | Comparative example 1 | Comparative example 2 | Comparative example 3 | Comparative example 4 | Comparative example 5 |
|---|---|---|---|---|---|---|
| Cord structure | | 1+7 | 1+7 | 1+7 | 1+6 | 1+7 |
| Core strand | Structure | 3+8+10 | 3+8+10 | 3+8+10 | 3+7+13 | 3+8 |
| | Diameter of core filament (mm) | 0.320 | 0.310 | 0.330 | 0.240 | 0.565 |
| | Diameter of first sheath filament (mm) | 0.320 | 0.310 | 0.330 | 0.340 | 0.565 |
| | Diameter of second sheath filament (mm) | 0.455 | 0.455 | 0.475 | 0.340 | - |
| Sheath strand | Structure | 3+8 | 3+8 | 3+8 | 3+9+12 | 3+8 |
| | Diameter of core filament (mm) | 0.385 | 0.390 | 0.385 | 0.240 | 0.375 |
| | Diameter of first sheath filament (mm) | 0.385 | 0.390 | 0.385 | 0.240 | 0.375 |
| | Diameter of second sheath filament (mm) | - | - | - | 0.340 | - |
| Cord | Diameter of cord (mm) | 5.44 | 5.44 | 5.52 | 5.23 | 5.46 |
| Ratio dc/ds | | 1.18 | 1.17 | 1.23 | 1.00 | 1.51 |
| Shear resistance (index number) | | 100 | 102 | 99 | 96 | 99 |
| Steel amount (index number) | | 100 | 102 | 100 | 102 | 99 |
| Ratio of Shear resistance / Steel amount (index number) | | 100 | 100 | 99 | 94 | 100 |

**Table 2**

| | | Example 1 | Example 2 | Example 3 | Example 4 | Example 5 | Example 6 | Example 7 |
|---|---|---|---|---|---|---|---|---|
| Applied belt | | 4B only | 3B + 4B | 3B + 4B | 3B + 4B | 3B + 4B | 3B + 4B | 3B + 4B |
| Cord structure | | 1+7 | 1+7 | 1+7 | 1+7 | 1+7 | 1+7 | 1+7 |
| Core strand | Structure | 3+8 | 3+8 | 3+8 | 3+8 | 3+8 | 3+8 | 3+8 |
| | Diameter of core filament (mm) | 0.510 | 0.510 | 0.520 | 0.540 | 0.540 | 0.540 | 0.540 |
| | Diameter of first sheath filament (mm) | 0.510 | 0.510 | 0.520 | 0.540 | 0.540 | 0.540 | 0.540 |
| | Diameter of second sheath filament (mm) | - | - | - | - | - | - | - |
| Sheath strand | Structure | 3+8 | 3+8 | 3+8 | 3+8 | 3+8 | 3+8 | 1+6 |
| | Diameter of core filament (mm) | 0.380 | 0.380 | 0.395 | 0.385 | 0.290 | 0.300 | 0.385 |
| | Diameter of first sheath filament (mm) | 0.400 | 0.400 | 0.395 | 0.385 | 0.380 | 0.370 | 0.385 |
| | Diameter of second sheath filament (mm) | - | - | - | - | - | - | - |
| Cord | Diameter of cord (mm) | 5.36 | 5.36 | 5.44 | 5.44 | 5.01 | 5.02 | 4.55 |
| Ratio dc/ds | | 1.28 | 1.28 | 1.32 | 1.40 | 1.42 | 1.46 | 1.40 |
| Shear resistance (index number) | | 109 | 109 | 112 | 108 | 104 | 100 | 87 |
| Steel amount (index number) | | 101 | 101 | 102 | 100 | 98 | 96 | 85 |
| Ratio of Shear resistance / Steel amount (index number) | | 108 | 108 | 110 | 108 | 106 | 104 | 102 |

As described above, in the cord formed in which a plurality of the sheath strands 12 having a layer-twisted structure is twisted around one core strand 11 having a two-layer-twisted structure and the value of the ratio dc/ds is set in the predetermined range, a gap between the sheath filaments 10b is made large, and thereby the rubber penetration rate is improved and the rust prevention performance is improved. That is, in a configuration in which the steel cord according to the present invention is applied to the fourth belt layer 4B, the fourth belt layer 4B served as a rust prevention cord derives a sufficient effect of preventing water from invading. Further, in a configuration in which the steel cord according to the present invention is applied to the third belt layer 3B in addition to the fourth belt layer 4B, the rust prevention performance is further improved.

Further, by adopting the steel cord according to the present invention, an increase of the steel amount is suppressed and the shear resistance is improved. With this, a lifetime of each of the third belt layer 3B and the fourth belt layer 4B against the cut separation is extended. Specifically, in a configuration in which the steel cord according to the present invention is applied to the third belt layer 3B and the fourth belt layer 4B, a lifetime against the cut separation is approximately 1.27 times as long as a lifetime of a configuration in which the steel cord according to the present invention is not adopted. With this, a lifetime of the pneumatic tire 1 can be extended.

In the present invention, the steel cord shown in Fig. 2 is applied to the third belt layer 3B and the fourth belt layer 4B, however it is not limited to this. The steel cord may be applied to the first belt layer 1B and the second belt layer 2B in addition to the third belt layer 3B and the fourth belt layer 4B. With this, the rust prevention performance of the first belt layer 1B and the second belt layer 2B is improved, and therefore the pneumatic tire 1 having excellent rust prevention performance can be provided.

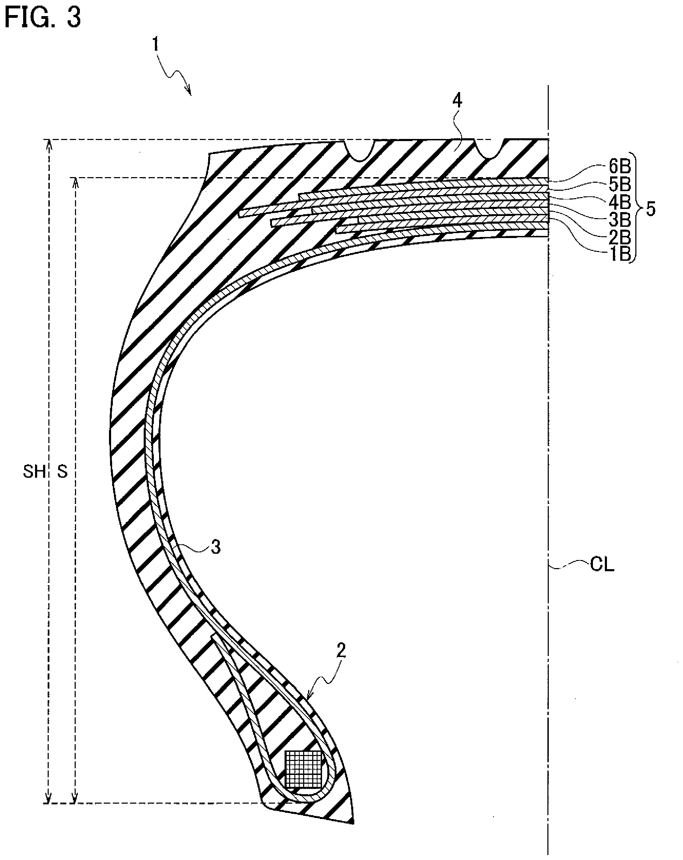

Further, the tread portion 4 shown in Fig. 1 includes a shear resistant function, however since the shear resistance of the third belt layer 3B and the fourth belt layer 4B is improved, the shear resistant function of the tread portion can be reduced. That is, a gauge thickness of the tread portion 4 can be made thin. With this, a cost can be reduced, and a failure of the pneumatic tire 1 caused by heat generated by a contact between the tread portion 4 and a road surface can be suppressed. Specifically in the gauge thickness, as shown in Fig. 3, when a tire sectional height SH is defined by a length between a bottom surface of the bead portion 2 and a portion at an outer side of the tire in the tire radial direction and a tire sectional height S is defined by a length between the bottom surface of the bead portion 2 and a portion at an outer side of the sixth belt layer 6B in the tire radial direction, the tire sectional height SH may be set to be smaller by 3% to 5% of the tire sectional height S.

Further, even in a case in which the steel cord according to the present invention is adopted in the third belt layer 3B and the fourth belt layer 4B, a failure except the cut separation is not affected. It is similarly applied to a configuration in which the steel cord according to the present invention is adopted in the first belt layer 1B and the second belt layer 2B.

Further, the steel cord according to the present invention may be applied to a carcass ply of the carcass layer 3. With this, the rust prevention performance against the water invasion due to a side cut is improved.

The entire contents of Japanese Patent Application No. 2016-082120 (filed on April 15, 2016) are incorporated in the present specification by reference.

### [Reference Signs List]

1: pneumatic tire
2: bead portion
3: carcass layer
4: tread portion
5: belt portion
10, 20: steel filament
10a, 20a: core filament
10b, 20b: sheath filament
11: core strand
12: sheath strand
30: spiral filament

## Claims

1. A construction vehicle tire comprising:
a carcass layer; and
a belt layer formed by six belts at an outer side of the carcass layer in a tire radial direction,
wherein:
a fourth belt arranged fourth from the carcass layer toward the outer side in the tire radial direction among the belt layer includes steel cords arranged along a predetermined direction;
the steel cord includes one core strand having a two-layer-twisted structure in which a plurality of core filaments and a sheath filament forming a sheath are twisted, and a plurality of sheath strands twisted with the core strand, the sheath strand having a layer-twisted structure in which a plurality of steel filaments are twisted; and
each of a gap between the core filaments adjacent to each other, a gap between the sheath filaments adjacent to each other, a gap between the core filament and the sheath filament, and a gap between the core stand and the sheath strand is filled with a predetermined rubber material.

2. The construction vehicle tire according to claim 1, wherein a third belt arranged third from the carcass layer toward the outer side in the tire radial direction among the belt layers includes the steel cords arranged along a predetermined direction.

3. The construction vehicle tire according to claim 1 or 2, wherein a carcass ply of the carcass layer includes the steel cords.

4. The construction vehicle tire according to any one of claims 1 to 3, wherein a ratio dc/ds of a diameter dc of the sheath filament forming the sheath of the core strand and a diameter ds of an outermost layer sheath filament forming an outermost layer sheath of the sheath strand is set to be more than 1.25 and less than or equal to 1.50.

5. The construction vehicle tire according to any one of claims 1 to 4, wherein the number of the sheath strands is set in a range between 7 and 9.

6. The construction vehicle tire according to any one of claims 1 to 5, wherein each of the filaments forming the core strand is formed in the same diameter.

7. The construction vehicle tire according to any one of claims 1 to 6, wherein a cord diameter is set to 4.40 mm or more.

8. The construction vehicle tire according to any one of claims 1 to 7, wherein each of a first belt arranged first toward the outer side in the tire radial direction among the belt layers and a second belt arranged at an outer side of the first belt in the tire radial direction includes the steel cords arranged along a predetermined direction.

9. The construction vehicle tire according to any one of claims 1 to 8, wherein, when a tire sectional height SH is defined by a length between a bottom surface of a bead portion and a portion at the outer side of the tire in the tire radial direction and a tire sectional height S is defined by a length between the bottom surface of the bead portion and a portion at an outer side of a belt layer arranged sixth toward the outer side in the tire radial direction, the tire sectional height SH is set to be 85% to 95% of the tire sectional height S.

10. A steel cord configured to be arranged along a predetermined direction in a fourth belt, which is arranged fourth from a carcass layer toward an outer side in a tire radial direction among a belt layer formed by six belts at an outer side of the carcass layer in the tire radial direction, the steel cord comprising:
one core strand having a two-layer-twisted structure in which a plurality of core filaments and a sheath filament forming a sheath are twisted; and
a plurality of sheath strands twisted with the core strand, the sheath strand having a layer-twisted structure in which a plurality of steel filaments are twisted,
wherein each of a gap between the core filaments adjacent to each other, a gap between the sheath filaments adjacent to each other, a gap between the core filament and the sheath filament, and a gap between the core stand and the sheath strand is filled with a predetermined rubber material.
